# EUROPEAN PATENT APPLICATION

(11) **EP 1 886 750 A1**
(43) Date of publication of application: **13.02.2008**
(21) Application number: 07002420.3
(22) Date of filing: 05.02.2007
(51) Int. Cl.: B23B 29/02, B23B 29/034, B23B 43/00, B23D 9/00, B23Q 9/00

(54) **Boring and facing head, entirely drilled with manual or automatic feed and autoreverse**

(30) Priority: 10.08.2006 IT GE20060086
(71) Applicant: de Angelis, Giuseppe, 16142 Genova (IT)
(72) Inventor: de Angelis, Giuseppe, 16142 Genova (IT)

(57) **Abstract**

This is a compatible multifunction machine for boring and facing, entirely drilled, that could be applied on the boring bar.

It is also provided with transversal advancement continuous movement manually or automatically with several speed , with or without autoreverse.
*the instrument is composed of*
a)principal body: which is the slide holder, entirely drilled, making it easily positioned on any traditional machine spindle or on the boring bar.
b)the tool holder slide, which has a perpendicular advancement motion in relation to the bar
• Manually ( with firm axis ) for savaging or positioning the tool
• Semi automatic feed by the mean of a contrast bar, giving motion to a kinematic chain, which has a differential device followed by other reduction gears from which the motion is resulting causing an advanced radial continuous movement of the slide.
• Automatic feed (with autoreverse) by the mean of a contrast bar giving motion to a kinematic chain which has a double differential device with automatic inversion, with a positive axial ratio at the phase of working and negative at the reverse phase, followed by other reduction gears from which an advancement continuous radial motion movement is resulted.

## Description

This invented machines, provides you with a hight precision boring and facing work, due to its automatic feed advancement head easily positioned on all types of machine spindles fixed or portable, with elevated simplicity of mounting and assemblage, being portable is making it ideal for boring and facing work in site too, for example it can be used as an application in coupling joint for shafts, flanges, valve seats, thermal power plant, oil refinery, shipyard, paper mills, chemical factories and iron metallurgy.

The fact that it is easily handled and the possibility to insert it on traditional machine and on boring bar, allows us to use it in mechanical workshops and in production lines too, because it is a hight accuracy device of boring and facing with affordable price.

In the already existed traditional machines of boring and facing, the work is done by a head over hanged on traditional tool machines, and in this way the head is overtaking a markable distance from the machine till reaching the working point, which gives vibration during work and may cause alteration in the precision of the work done.

By introducing the newly invented machine, it will provide us with a boring and facing work with such simplicity and elimination of any disadvantages described before of traditional machine and with time saving.

All this is due to its very particular form of being entirely drilled allowing to it to be easily applicable on motorized bar (see also application number 05020530) which is supported from its extremities.

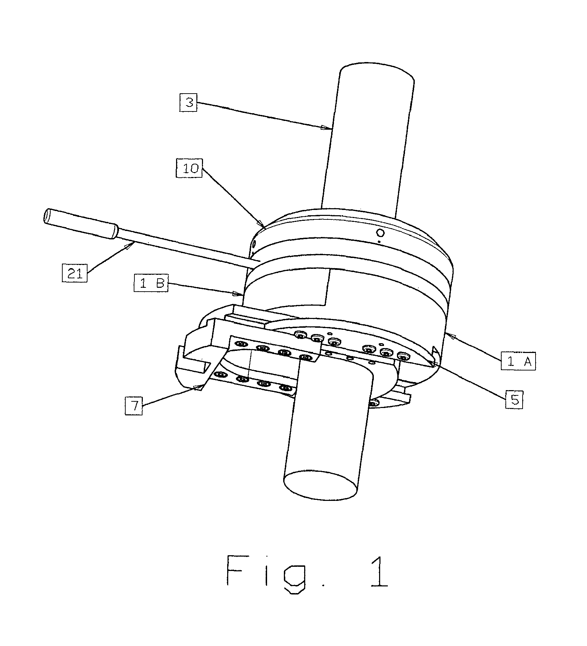

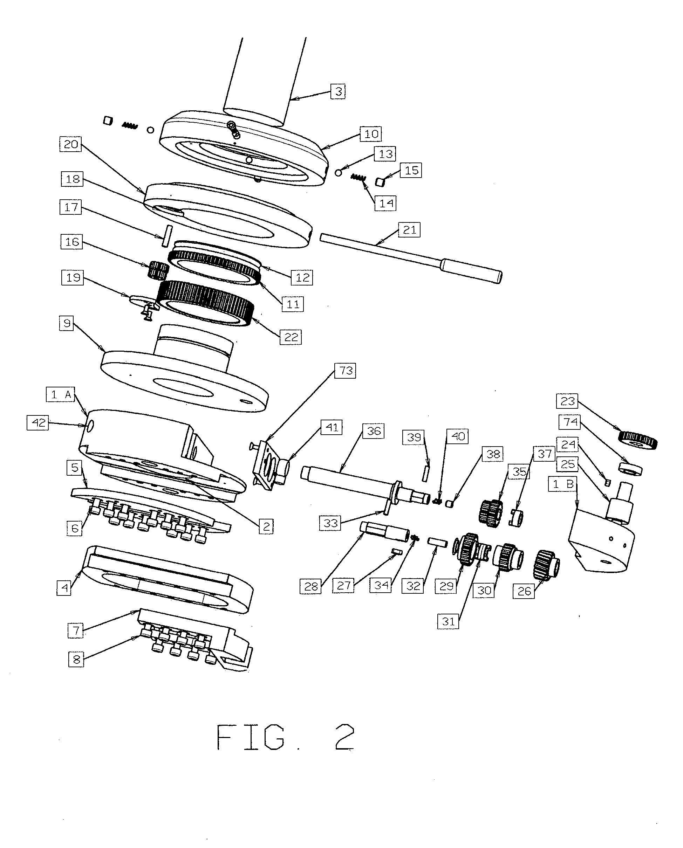

As can be seen in **(Fig.2)** the automatic head is realized from such mechanical components as will be described :
principal body composed of pieces **(1A)** which is entirety drilled **(2)** which is positioned and anchoraging of the head on the spindle of the machine **(3),** assembled with the box **(1B)** and the lid cover **(73)** containing parts of the kinematic chain of advancement of the tool holder slide **(4)**.

Perpendicularly to the axis of the machines, from one part of the main body **(1)**, exists a slide guide in which slide the operating slide **(4)** receiving the motion from the lead nut **(41)** and maintained in position through slide ways **(5)** and fixing screws **(6)** and on which is anchored the tool holder **(7)** also with fixing screws **(8)** carrying the tool itself (not represented).

In the opposing part of the former described, is attached the components of the parts of the kinematic chain **(9)** which is connected to the emergency clutch **(10)** which is at its turn attached to the gear **(11)** through the emergency clutch mechanism, and this mechanism is composed of a track **(12)** where exists recess diametrically opposing where is attached the sphere **(13)**, maintained in place by the spring **(14)** and grain **(15)**.

In case of crash of the tool or at the end of the work , this mechanism is activated, causing the sphere to get out of the recess and slide only in the track.

The motion is transmitted from the emergency clutch body **(10)** to the gear **(11)** through the dragging satellite **(16)** which is splined to the shaft **(17)** fitting in the slot **(18)** covered by the lid cover **(19)** of the box holding the satellite **(20)**.

In the moment when the box holding the satellite **(20)** is contrasted by the contrast bar **(21)** or other, the satellite **(16)** transmit the motion to the conducting gear **(22)** of the first reduction unit, which by its turn drags the gear **(23)** on the bushing **(74)**, keyed by the feather key **(24)** on the worm **(25)** which by its turn transmit the motion to the spiral bevel gear **(26)**. With particular referring to Fig.**4,3,2,** this gear is keyed **(27)** on the shaft **(28)** transmitting the motion to the gears **(29-30)** also keyed to the shaft **(28)**, which are by their turn inserted alternatively to the shaft through the graft **(31)**, constituting the first and the second gears of speed motion.

The insertion and the withdrawal of the speed is realized by the sliding of a coupling hexagonal graft with two positions **(31)** on the shaft **(28)**, so the movement is obtained by the action of the grain **(32)** and pin **(33)** which press on a spring **(34)** fitting in the shaft **(28)**.

Both the two gears **(29-30)** are engaged in a homologous way with the conducting cone **(35)** composed also of two gears integrated together, but move freely on the shaft of the lead screw **(36)**.

To make the conducting cone **(35)** integrated with the lead screw **(36)**, we put another simple hexagonal graft with two position **(37)** (fixed - neutral) and through the positioning of a grain **(38)**, pin **(39)** which are pressing on a spring **(40)** attached inside the lead screw **(36)** in which slide the nut **(41)** which runs to the slot **(42)** transmitting the motion to the operating slide **(4)**.

It is also possible to rotate the lead screw **(36)** manually, by the use of a wrench or a screw in the slot **(42)**, this should be done after unscrewing the grain **(38)**, which through the spring **(40)** will also unscrew the conducting cone **(35)** and liberating the gears to run freely on the lead screw **(36)** allowing for a manually positioning.

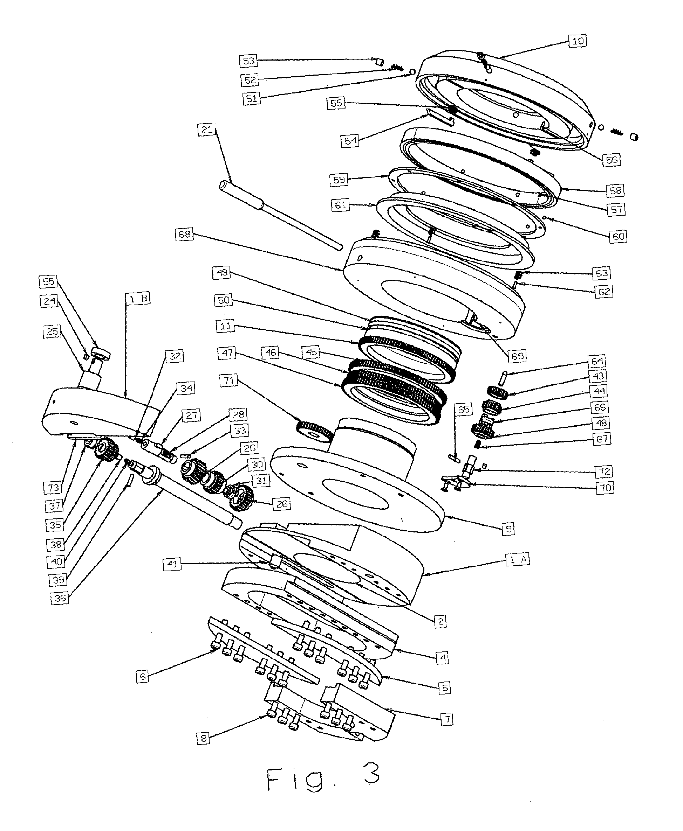

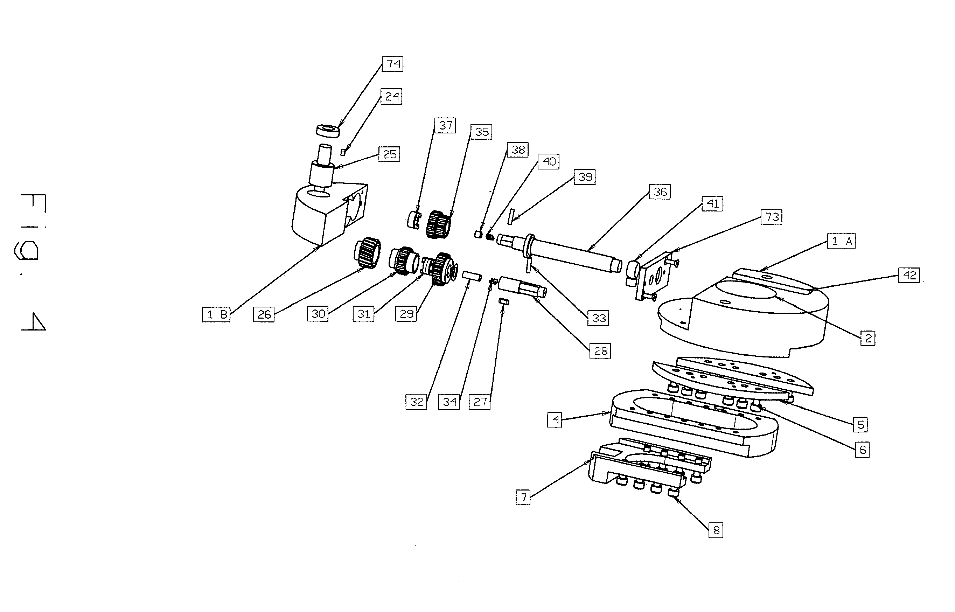

It is also possible to equip the machine with an autoreverse mechanism. Referring to **Fig. 3** this mechanism allows an automatic return with a higher speed relatively to the speed of advancement.

This solution is possible due to a differential mechanism modified in compared to first one by which is obtained an inversion of transmission ratio from positive to negative causing the inversion of the motion.

In **Fig 3** is demonstrated the principal body, composed of **(1A)** and **(1B)** having the drill **(2)** entirely in it allowing for its positioning and anchoraging on any spindle machines.

In perpendicular to the axis of the spindle, from one part of the principal body, exists the slide carrying the tool **(4)**, maintained in position by sideways **(5)** and fixing screws **(6)** and on it is anchored the tool support **(7)** also by fixing screws **(8)** carrying the tool it self (not represented).

From the opposing part is attached a support **(9)** part holding the kinematic chain of movement, this support is connected to emergency clutch **(10)**, which is by its turn attached to the gear **(11)** through a mechanism of emergency as described before.

So when the contrast motion is applied by a contrast bar **(21)** or other in the slot of the box **(68)**, with the satellite fitting in it, the motion happens this way.

In the phase of advancement work ,the first differential reduction is calculated with a positive ratio and the motion is passing from the motive gear **(11)** to the satellite **(43-44)**, fitting in the slot **(69),** covered by the led cover **(70)** of the satellite holder box **(68)**, to the conducting gear **(45)** united with the gears **(46-47)** and while the satellite **(48)** is free. So the gear **(47)** engage with gear **(71)**, which is splined to the shaft **(25)**, transmitting the motion radially to the tool holder slide according to modality illustrated in the first type without autoreverse.

In the return phase, when it is activated by the emergency clutch, the differential reduction ratio is calculated with a negative transmission ratio, so transmitting the motion from the motive gear **(11)** to the satellite **(43-48)** fitting in the slot **(69)**, to the conducting gear **(46)**, united with the gears **(45-47)** while the satellite **(44)** is free.

The first motive gear **(11)** is a fixed point, provided in its upper part with a two circumferential tracks **(49-50)**, built on two differential level, the first rolling track **(49)** has four recess diametrically opposing on which move spheres **(51)**, springs **(52)** and grains of regulation **(53)**, who are activated when the tool crash or finish the work.

The second inferior track **(50)**, has two acceleration cams diametrically opposing, when the emergency movement happens they activate two lock bolt **(54)**.

Those lock bolt **(54)** fitting in the slot **(56)** and maintained in position by the spring **(55)** they have an inclined end plan, that fits on a corresponding plan **(57)** in the fixed upper ring **(58)** of the ball bearing, composed of retainers **(59)**, spheres **(60)** and inferior ring **(61)**. This ring is normally maintained in place by four pins **(62)** and springs **(63).**

When the movement happens it causes activation of the lock bolt **(54)** which goes down in the ball bearing and by its turn cause that inferior ring change its position and press on the pin united with the graft **(66)** pressing the spring in the shaft **(72)** so the hexagonal graft **(66)** by changing its position is freeing the satellite **(44)** and connecting to the satellite **(48)**.

And that is how the opposing movement is realized.

## Claims

1. CLAIM 1: the boring and facing head of Fig. 1, having the tool holder device capable of performing a radial advancement movement manually or automatic **characterized by** the fact of having a hole centrally passing **(2)** in it, which allows not only its attachment on all types of rotating machines spindle but also on portable boring bar and can be fixed by feather key or other at any point of it.

2. CLAIM 2 : AS CLAIMED IN CLAIM 1, the head is also equipped by a differential device of radial advancement of the tool holder slide, **characterized by** the positioning of the gear wheels in planetary concentrically respected to the bar, and they have different number of teeth one from the other and they are anchoraging to a satellite fitting in a slot in the box of contrast (20, FIG.2 or 68, FIG.3)where the motion of advancement will be commanded.

3. CLAIM 3: AS CLAIMED IN CLAIM 2 , this differential device **characterized by** its capability to be activated by the insert of a contrast bar **(21)** or other equivalent device.

4. CLAIM 4: AS CLAIMED IN CLAIM 2, **characterized by** that the advancement movement of the tool holder slide is continuous.

5. CLAIM 5 : AS CLAIMED IN CLAIM 4, the device is **characterized by** the presence of a speed selector for the slide advancement movement, guided by the hexagonal graft **(31)** moving with grain-pin and spring.

6. CLAIM 6 : AS CLAIMED IN CLAIM 4, it can also be equipped with an autoreverse mechanism, **characterized by** the presence of a couple of lock bolt diametrically opposing **(54)**, having inclined plans connected to the emergency clutch, which in case of end of the work or any crash of the tool, those bolts go down and engage their corresponding plans in the rings of bearing balls, causing the lowering of the rings which by its turn push pin **(64)** transmitting the motion to a modified differential mechanism to obtain an inversion of the transmission ratio from positive to negative which causes the inversion of the motion.

7. CLAIM 7 : AS CLAIMED IN CLAIM 1 , the head is applicable on any relating machine, so it is **characterized by** its possibility to be used in boring or facing work without special accessory mechanism dedicated specially for it.

8. CLAIM 8 : AS CLAIMED IN CLAIM 1, **characterized by** the possibility of handling the slide manually or automatically through hexagonal graft **(37)** moved by grain-pin and spring
